# EUROPEAN PATENT SPECIFICATION

(11) **EP 3 110 638 B1**
(45) Date of publication and mention of the grant of the patent: **03.04.2019**
(21) Application number: 15714044.3
(22) Date of filing: 26.02.2015
(51) Int. Cl.: F16C 11/08, B60G 7/00, F16C 11/06

(54) **A CONNECTING ARM WITH A BUSHING**
VERBINDUNGSARM MIT EINER BUCHSE
BRAS DE RACCORDEMENT COMPORTANT UNE DOUILLE

(30) Priority: 26.02.2014 TR 201402291
(43) Date of publication of application: 04.01.2017
(73) Proprietor: Sampa Otomotiv Sanayi Ve Ticaret Anonim Sirketi, 55300 Samsun (TR)
(72) Inventor: GOZ, Mustafa, 55300 Samsun (TR)
(74) Representative: Sevinç, Erkan
(86) International application number: PCT/TR2015/000071
(87) International publication number: WO 2015/130250

(56) References cited:
- WO-A1-2006/057585
- WO-A1-2009/125238

## Description

Present invention involves a connecting arm with a bushing in a form that allows a uniform distribution of affecting external forces.

There is a connecting arm between the body of the vehicle and the axle shaft in both light commercial vehicles and heavy duty vehicles such as coaches, buses, trucks, construction equipment, trains, etc. Connecting arms consist of a bushing that provides a connection to the part on which it will be mounted, and a bearing mounted on such bushing. By means of such bushing and connecting arm with a bearing, the axle shaft can be fixed to the body.

In the state of the art, international patent document no WO2009125238 defines a bushing with a length longer than its width, and a connecting arm that includes a bearing which in return surrounds such bushing.

The purpose of the present invention is to provide a connecting arm with a bushing that allows a uniform distribution of affecting external forces and stress.

The connecting arm realized in order to fulfill the objective of the present invention is explicated in the first claim and in the following claims involves at least one core and at least one bushing with at least two lugs with at least one hole, extending from such core.

The connecting arm of the invention consists of a core located within the intersection area of two identical circles assumed to intersect at two points, and at least one hole where the geometric center is located on one of intersection points of the circles.

Connecting arms typically include a bearing made of a flexible material such as rubber or similar material, surrounding the core. Form of the bushing allows axial or radial
movement of the bearing around the core during the movement of the vehicle so that deformation in the bearing is reduced and service life of the bearing is extended.

In the intersection area formed by two circles that are assumed to be intersecting at least partially an elliptic form is created. Outer surface of the core, at least partially, coincides with that of such elliptic form. Coinciding of the intersection points of circles that form the outer form of the core with the geometric centers of the holes minimizes the horizontal forces on the core. Geometric center of the core are in equal distances from the gravity centers of the assumedly intersecting circles. Thus, homogenous distribution of the stress is provided.

In one of the embodiments of the invention, gravity center of the core is located on the line that passing through geometric centers of the holes. Gravity center of the bushing falls on the line that passing through gravity centers of the lugs and the core. Upper and lower parts of the bushing are symmetrical with respect to horizontal plane of the bushing.

In one embodiment of the invention, the bushing includes at least one intermediate wall which is extending from the lug and has a convex front section, and at least one outer wall which is extending from intermediate wall and curved towards the outside of the bushing , the geometric center of the hole is the closest point of the core and the outlet of the hole with respect to the front section, the border point of the outer wall and intermediate wall is the tangent points of same circles. The difference in slope between intermediate wall and outer wall creates an intrusion on the core thus an alcove in radius form that allows axial and radial movement of the bearing around the core is formed. The bearing that surrounds the core contacts with outer wall only.

In another embodiment of the invention, the core includes a middle wall with a linear cross-section, located on the middle of outer wall. Thus, the loads on the bushing diffuse on larger area, and the pressure on the surface across the axis of the movement is reduced.

In one embodiment of the invention, width of the core is almost equal with the length of the core. Thus, uniform distribution of the force and vibration on the bushing axis during the movement of the vehicle is provided.

In one embodiment of the invention, the connecting arm is a V-arm.

In one embodiment of the invention, the connecting arm is a torque arm.

In one embodiment of the invention connecting arm is a wishbone.

By bushing of the present invention, uniform distribution of the external forces as well as homogenous distribution of stress is provided.

The connection arm realized in order to fulfill the objectives of the present invention is illustrated in the attached figures, where:
Figure 1 - is a perspective view of the connecting arm.
Figure 2 - is an exploded perspective view of the detail A.
Figure 3 - is a perspective view of a bushing.
Figure 4 - is a top view of the bushing.
Figure 5 - is a front cross-section view of the bushing and circles assumed to be intersecting.

The parts in the drawing are numerated individually as follows:
- 1.: Connecting arm
- 2.: Core
- 3.: Lug
- 4.: Bushing
- 5.: ,105 Hole
- 6.: Intermediate wall
- 7.: Outer wall
- 8.: Middle wall
- B.: Bearing

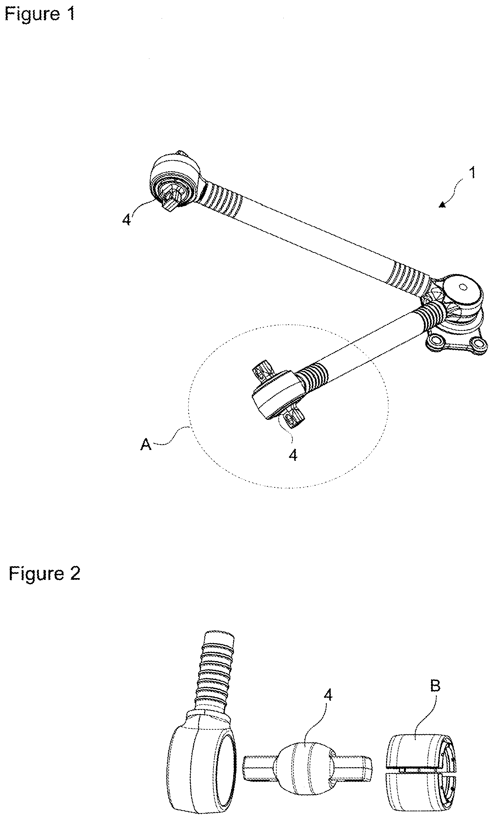

The connecting arm (1) comprising at least one bushing (4) that has at least one core (2) and at least two lugs (3) extending outwards from the core (2), and at least one hole (5,105) which is arranged on the lug (3) (Figure 1). There is at least one connecting arm (1) between the body of the vehicle and the axle shaft in both light commercial vehicles and heavy duty vehicles such as coaches, buses, trucks, construction equipment, trains, etc. Through connecting arm (1) the axle shaft is connected to the body of the vehicle. The bushing (4) is fixed on the body of the vehicle by bolts. Holes (5, 105) are mounting gaps through which the bolts are placed. Fixation of the bolts on the bushing (4) connects the connecting arm (1) to the body of the vehicle.

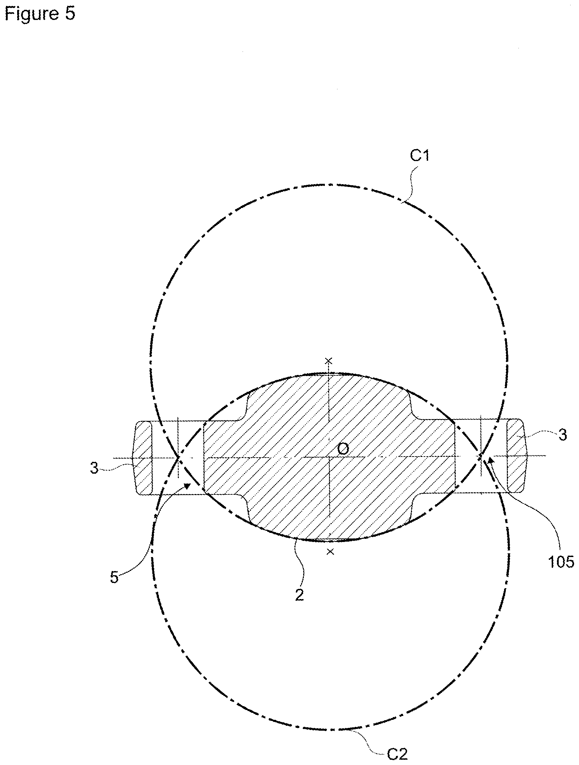

Connecting arm (1) of the present invention comprises a core (2) located within the intersection area of two identical circles (C1, C2) assumed to intersect at two points, and at least one hole (5, 105) where the geometric center is located on one of the intersection points of the circles (C1, C2). In this way, shear force on the bolts that connect the bushing (4) to the body of the vehicle is minimum, and the stress distribution is uniform (Figure 5).

Connecting arm (1) usually comprises a bearing (B) surrounding the core (2). The bearing (B) is made of a flexible material (Figure 2).

At least a partially an ellipse occurs in the intersection area of the circles (C1, C2) which are assumed to intersecting. Outer surface of the core (2) is almost totally located on such ellipse. The core (2) is confined by such ellipse. Gravity center of the core (2) is in equal distance to the gravity centers of the circles (C1, C2) assumed to be intersecting (Figure 5).

In one embodiment of the invention, gravity center of the core (2) is located on the line that passing through of geometric centers of the holes (5, 105). Gravity center of the core (2) and gravity center of the bushing (4) are on the same point (O) so that a uniform stress distribution is provided (Figure 5).

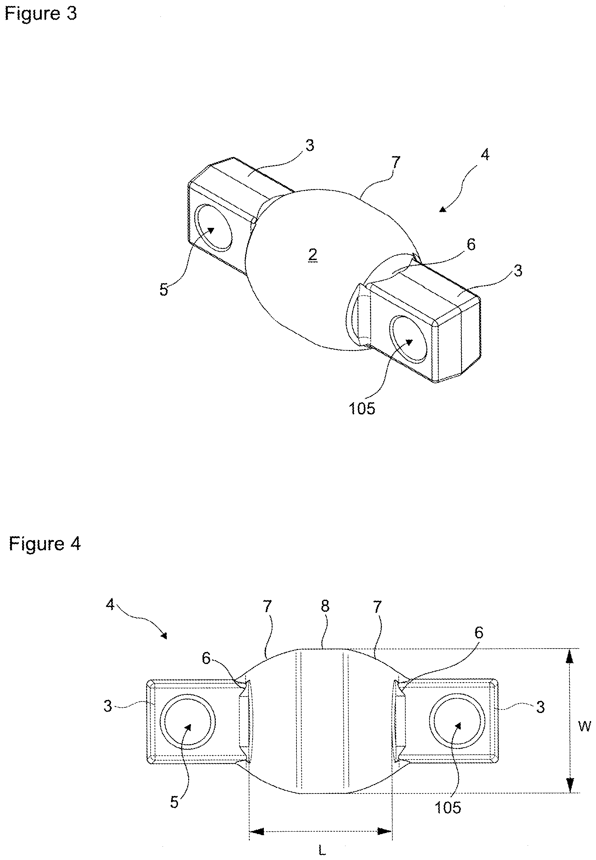

In one embodiment of the invention, the bushing (4) includes at least one intermediate wall (6) which is extending from the lug (3) and has a curved front section, and at least one outer wall (7) which is extending from intermediate wall (6) and curved towards the outside of the bushing (4). There is a difference in slope between intermediate wall (6) and outer wall (7). The geometric center of the hole (5, 105) is the closest point of the core (2) and the outlet of the hole (5, 105) with respect to the front section, the border point of the outer wall (7) and intermediate wall (6) is the tangent points of circles (C1, C2). By means of difference in slope between intermediate wall (6) and outer wall (7), a recess is formed on the core (2). So that an area which allows the movement of the bearing (B) as a result of the elastic deformation is created during axial and radial movement of the bearing (B) as the vehicle is in motion. The bearing (B) that surrounds the core (2) only connects with outer wall (7) (Figure 3, Figure 4, Figure 5).

In one embodiment of the invention, the core (2) includes a middle wall (8) which is set on the outer wall (7) by the manner surrounds the middle and has front cross section which is linear formed. By means of the form of the middle wall (8), loadings on the middle wall (8) become dispersed loadings and thus the pressure on the middle wall (8) is reduced. As such, surface tension of the bearing (B) surrounding the bushing (4) decreases, and deformation in the bearing (B) is prevented (Figure 5).

In one embodiment of the invention, width (W) of the core (2) is less than and/or equal to its length (L). This way allows uniform distribution of the force and vibration on the bolts and holes (5, 105) during the movement of vehicle (Figure 4).

In one embodiment of the invention, connecting arm (1) is a V-arm.
In one embodiment of the invention, connecting arm (1) is a torque arm.

In one embodiment of the invention, connecting arm (1) is wishbone.

By the present invention, a bushing (4) in a form that allows the dispersion of the external force on the vehicle during movement, and enables a uniform stress distribution is achieved.

## Claims

1. A connecting arm (1) comprising at least one bushing (4) that has at least one core (2) and at least two lugs (3) extending outwards from the core (2), and at least one hole (5,105) which is arranged on the lug (3) **characterized by** a core (2) located within the intersection area of two identical circles (C1, C2) assumed to intersect at two points, and at least one hole (5, 105) where the geometric center is located on the one of intersection points of the circles (C1, C2).

2. A connecting arm (1), according to claim 1, **characterized by** a core (2), gravity center of which is located on the line that passing through the geometric centers of the holes (5, 105).

3. A connecting arm (1), according to claims 1 or 2, **characterized by** a bushing (4) includes at least one intermediate wall (6) which is extending from the lug (3) and has a curved front section, and at least one outer wall (7) which is extending from intermediate wall (6) and curved towards the outside of the bushing (4), the geometric center of the hole (5, 105) is the closest point of the core (2) and the outlet of the hole (5, 105) with respect to the front section, the border point of the outer wall (7) and intermediate wall (6) is the tangent points of circles (C1, C2).

4. A connecting arm (1), according to claim 3, **characterized by** a core (2) having a middle wall (8) which is set on the outer wall (7) by the manner surrounds the middle and has front section which is linear formed.

5. A connecting arm (1), according to any one of the above claims, **characterized by** a core (2) that its width (W) is shorter and/or equal to its length (L).

6. A connecting arm (1), according to any one of the above claims, **characterized by** connecting arm (1) is a V-arm.

7. A connecting arm (1), according to any of claims 1 to 6, **characterized by** connecting arm (1) is a torque arm.

8. A connecting arm (1), according to any of claims 1 to 6, **characterized by** connecting arm (1) is a wishbone.

## Patentansprüche

1. Verbindungsarm (1) mit mindestens einer Buchse (4), die mindestens einen Kern (2) und mindestens zwei von dem Kern (2) nach außen ragende Ansätze (3) besitzt, und mit mindestens einem Loch (5, 105), das an dem Ansatz (3) angeordnet ist, **gekennzeichnet durch** einen Kern (2), der sich innerhalb des Kreuzungsbereichs zweier identischer Kreise (C1, C2) befindet, von denen angenommen wird, dass sie sich an zwei Punkten schneiden, und mindestens ein Loch (5, 105), dessen geometrischer Mittelpunkt auf dem einen der Schnittpunkte der Kreise (C1, C2) liegt.

2. Verbindungsarm (1) nach Anspruch 1, **gekennzeichnet durch** einen Kern (2), dessen Schwerpunkt auf der Linie liegt, die durch die geometrischen Mittelpunkte der Löcher (5, 105) verläuft.

3. Verbindungsarm (1) nach Anspruch 1 oder 2, **dadurch gekennzeichnet, dass** eine Buchse (4) mindestens eine mittlere Wand (6) aufweist, die von dem Ansatz (3) ausgeht und einen gekrümmten vorderen Abschnitt besitzt, und mindestens eine äußere Wand (7), die von der mittleren Wand (6) ausgeht und in Richtung der Außenseite der Buchse (4) gekrümmt ist, wobei der geometrische Mittelpunkt des Loches (5, 105) der nächste Punkt des Kerns (2) ist und der Auslass des Loches (5, 105) in Bezug auf den vorderen Abschnitt, der Grenzpunkt der äußeren Wand (7) und der mittleren Wand (6) die Tangentialpunkte der Kreise (C1, C2) darstellt.

4. Verbindungsarm (1) nach Anspruch 3, **gekennzeichnet durch** einen Kern (2) mit einer mittleren Wand (8), die an die äußere Wand (7) angesetzt ist, welche die mittlere Wand umgibt und einen linear ausgebildeten vorderen Abschnitt besitzt.

5. Verbindungsarm (1) nach einem der vorhergehenden Ansprüche, **gekennzeichnet durch** einen Kern (2), dessen Breite (W) kleiner und/oder gleich seiner Länge (L) ist.

6. Verbindungsarm (1) nach einem der vorhergehenden Ansprüche, **dadurch gekennzeichnet, dass** der Verbindungsarm (1) ein V-Arm ist.

7. Verbindungsarm (1) nach einem der Ansprüche 1 bis 6, **dadurch gekennzeichnet, dass** der Verbindungsarm (1) ein Drehmomentarm ist.

8. Verbindungsarm (1) nach einem der Ansprüche 1 bis 6, **dadurch gekennzeichnet, dass** der Verbindungsarm (1) ein Querlenker ist.

## Revendications

1. Bras de raccordement (1) comprenant au moins une douille (4) qui a au moins une partie centrale (2) et au moins deux pattes (3) s'étendant vers l'extérieur à partir de la partie centrale (2), et au moins un trou (5, 105) qui est agencé sur la patte (3), **caractérisé par** une partie centrale (2) située dans la zone d'intersection de deux cercles identiques (C1, C2) se croisant en deux points, et au moins un trou (5, 105) dont le centre géométrique est situé sur l'un des points d'intersection des cercles (C1, C2).

2. Bras de raccordement (1) selon la revendication 1, **caractérisé par** une partie centrale (2) dont le centre de gravité est situé sur la ligne qui passe par les centres géométriques des trous (5, 105).

3. Bras de raccordement (1) selon la revendication 1 ou 2, **caractérisé par** une douille (4) comprenant au moins une paroi intermédiaire (6) qui s'étend à partir de la patte (3) et a une section avant incurvée, et au moins une paroi externe (7) qui s'étend à partir de la paroi intermédiaire (6) et est incurvée vers l'extérieur de la douille (4), le centre géométrique des trous (5, 105) étant le point le plus proche de la partie centrale (2) et de la sortie du trou (5, 105) par rapport à la section avant, et le point de bordure de la paroi externe (7) et de la paroi intermédiaire (6) étant les points tangents des cercles (C1, C2).

4. Bras de raccordement (1) selon la revendication 3, **caractérisé par** une partie centrale (2) ayant une paroi médiane (8) qui est définie sur la paroi externe (7) de façon à entourer le milieu et a une section avant qui est formée de manière linéaire.

5. Bras de raccordement (1) selon l'une quelconque des revendications précédentes, **caractérisé par** une partie centrale (2) dont la largeur (W) est inférieure et/ou égale à la longueur (L).

6. Bras de raccordement (1) selon l'une quelconque des revendications précédentes, **caractérisé par** un bras de raccordement (1) qui est un bras en V.

7. Bras de raccordement (1) selon l'une quelconque des revendications 1 à 6, **caractérisé par** un bras de raccordement (1) qui est un bras de couple.

8. Bras de raccordement (1) selon l'une quelconque des revendications 1 à 6, **caractérisé par** un bras de raccordement (1) qui est un triangle de suspension.
